(19)

Europäisches
Patentamt

European
Patent Office

Office européen
des brevets

(11) **EP 4 483 573 B1**

(12) **EUROPEAN PATENT SPECIFICATION**

(45) Date of publication and mention
of the grant of the patent:
**01.07.2026   Bulletin 2026/27**

(21) Application number: **24771877.8**

(22) Date of filing: **07.05.2024**

(51) International Patent Classification (IPC):
**G06F 3/01** (2006.01)   **G06F 3/03** (2006.01)
**G02B 27/01** (2006.01)   **G06T 7/246** (2017.01)
**G06F 3/0346** (2013.01)

(52) Cooperative Patent Classification (CPC):
**G02B 27/017; G06F 3/011; G06F 3/012;**
**G06F 3/0304; G06F 3/0346; G06T 7/246;**
G02B 2027/0138; G02B 2027/014;
G02B 2027/0187; G06T 2207/10016

(86) International application number:
**PCT/KR2024/006110**

(87) International publication number:
**WO 2024/237542 (21.11.2024 Gazette 2024/47)**

(54) **HEAD MOUNTED DISPLAY DEVICE FOR MOTION SYNCHRONIZATION-BASED HEAD POSE
ESTIMATION AND OPERATING METHOD FOR THE SAME**

KOPFMONTIERTE ANZEIGEVORRICHTUNG ZUR
BEWEGUNGSSYNCHRONISATIONSBASIERTEN KOPFHALTUNGSSCHÄTZUNG UND
BETRIEBSVERFAHREN DAFÜR

VISIOCASQUE POUR ESTIMATION DE POSE DE TÊTE BASÉE SUR UNE SYNCHRONISATION
DE MOUVEMENT ET SON PROCÉDÉ DE FONCTIONNEMENT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **12.05.2023   IN 202341033622**
**29.12.2023   IN 202341033622**

(43) Date of publication of application:
**01.01.2025   Bulletin 2025/01**

(73) Proprietor: **Samsung Electronics Co., Ltd**
**Suwon-si, Gyeonggi-do 16677 (KR)**

(72) Inventors:
• **JAIN, Rajat Kumar**
**Maharashtra 412207 (IN)**
• **SENGUPTA, Sarthak**
**Uttar Pradesh 201014 (IN)**

• **JOSHI, Rajas Jayant**
**Maharashtra 440022 (IN)**
• **SAHA, Sujoy**
**Karnataka 560103 (IN)**
• **ABHISEK, Kumar**
**Jharkhand 826001 (IN)**

(74) Representative: **Appleyard Lees IP LLP**
**G Mill**
**Dean Clough Industrial Park**
**Halifax HX3 5AH (GB)**

(56) References cited:
**WO-A1-2023/075765      KR-A- 20210 012 442**
**US-A1- 2019 178 654    US-A1- 2020 404 078**
**US-A1- 2021 034 161    US-A1- 2021 264 664**
**US-A1- 2022 197 380    US-A1- 2023 035 458**

## Description

**Technical Field**

The present disclosure relates to Extended Reality "XR" devices. More particularly the disclosure relates to Head Mounted Display Device "HMD" such as Extended Reality "XR" devices for motion synchronization-based head pose estimation, and method thereof.

**Background Art**

In the realm of Augmented Reality "AR" or Virtual Reality "VR", HMD devices have the capability to perform various tasks such as object interaction, drawing in AR, and navigation. However, to navigate in the AR or VR, HMD devices require an efficient method of Simultaneous Localization and Mapping "SLAM", which involves establishing a connection or mapping the user with respect to three-dimensional "3D" space. Inertial Measurement Unit "IMU" sensors provide data at a higher frequency than the rate at which images are provided by the camera sensor. Current SLAM methods use IMU data for initial head movement prediction, and visual cues to refine the predicted movement using Bundle Adjustment, "BA", ultimately outputting the refined pose as the final head pose.

To estimate an approximate initial head movement at the current timestamp, an integration step is used, which integrates all the IMU data between two frames to find the translation and orientation. This step is repeated at the next camera frame. However, since the visual data frequency is limited to 30fps, the refinement process can only run at that frequency, limiting the overall throughput. To increase throughput, current SLAM methods interpolate the pose using IMU data points and provide a pose at a higher frequency.

Unfortunately, the data provided by the IMU is often noisy and introduces drifts in the predicted pose. Therefore, even though the pose throughput increases using IMU, the noise present in the IMU data makes it more erroneous, which affects the overall accuracy of the calculated head pose. To combat this issue, a conventional system uses denoising IMU data along with camera frames data for pose estimation. However, the BA itself is computation-intensive, involving differentiation, gradient calculation, multiple iterations, and a non-linear least square solver, resulting in a significant load in terms of runtime operations, and power.

Thus, it is desired to address the above-mentioned disadvantages or other shortcomings or at least provide a useful alternative.

WO 2023/075765 A1 describes simultaneous localization and mapping (SLAM) for rendering extended reality content. It describes an electronic device that obtains a sequence of depth images captured by a depth camera in a scene. Each depth map has a first resolution and includes a respective array of depth values. A sequence of confidence maps are obtained with the sequence of depth images. Each depth image corresponds to a respective confidence map having the first resolution and includes an array of confidence values, and each confidence value indicates a confidence level associated with a respective depth value measured at a corresponding location of the respective depth image. The electronic device also obtains an inertial sensor data measured by the inertial sensor concurrently with the depth images, and determines a plurality of device poses in the scene based on the depth images, confidence maps, and inertial sensor data.

US 2019/178654 A1 describes location estimation methods that facilitate the task of efficiently finding the location of a mobile platform in scenarios in which the uncertainties associated with the coordinates of the map features are anisotropic and/or non-proportional. It also describes location estimation methods that facilitate decoupling of location estimation from feature estimation. It also describes feature estimation methods that facilitate the combining of environmental descriptions provided by two or more mobile platforms, and/or facilitate decoupling of a data aggregation from feature re-estimation.

US 2020/404078 A1 describes systems and methods for adaptive backchannel synchronization for virtual, augmented, or mixed reality (xR) applications in edge cloud architectures. In some embodiments, an Information Handling System (IHS) may include a memory having program instructions stored thereon that, upon execution by a processor, cause the IHS to: receive, from a first Head-Mounted Device (HMD), first Simultaneous Localization and Mapping (SLAM) data comprising a first plurality of packets; receive, from the HMD, an indication of a synchronized time; and at least one of: in response to a determination that the first SLAM data is advanced with respect to the synchronized time by a threshold value, drop one or more of the first plurality of packets; or in response to a determination that the first SLAM data is lagged with respect to the synchronized time by the threshold value, transform lagged SLAM data into current SLAM data.

**Disclosure**

**Technical Solution**

Accordingly, an embodiment herein discloses a method for motion synchronization-based head pose by an HMD device. The method includes receiving, by the HMD device, motion data from a plurality of motion sensors of the HMD device, receiving, by the HMD device, a plurality of image frames from at least one Simultaneous Localization and Mapping "SLAM") camera of the HMD device and estimating, by the HMD device, a plurality of motion parameters of the head movements of a user from the plurality image frames received from the SLAM camera to generate a filtered subset of motion data received from the motion sensors based on the motion parameters of the head movements. Finally, the method includes synchronizing the image frames received from the SLAM camera and the filtered subset of the motion data and estimating the head pose based on the synchronized image frames and motion data.

In an embodiment, receiving the motion data from the motion sensors of the HMD device includes selecting the motion data from the motion sensors based on selection strategy and pre-integrating the motion data from the sensor data based on the selection strategy to determine a predicted pose of the user wearing the HMD device.

In an embodiment, determining the predicted pose of the user wearing the HMD device and receiving one of image frames, landmarks in the image frames, and the predicted pose of the user wearing the HMD device to determine a refined pose for frames based on a skipping strategy using one of the image frames, the landmarks in the image frames, and the predicted pose of the user wearing the HMD device.

In an embodiment, pre-integrating the motion data from the motion sensors based on the selection strategy to determine a threshold for the pre-integrated motion data and a refined pose frame, and the threshold is an amount of noise in the motion data to determining a deviation in the threshold between the pre-integrated motion data and the refined pose frames. Further, the method discloses identifying a boundary of the refined pose frames in directions based on the deviation in the threshold and pre-integrating the motion data when the boundary of the refined pose frames in the plurality of directions in less than the threshold.

In an embodiment, determining the refined pose frames based on the skipping strategy using the image frames, the landmarks in the image frames, and the predicted pose of the user wearing the HMD device, includes receiving the pre-integrated motion data when the boundary of the refined pose frames in the directions in less than the threshold and determining the amount of threshold beyond the boundary of the refined pose frames for historical image frames of the refined pose frames. Further, the method includes determining a margin value for the threshold beyond the boundary of the refined pose frames and selecting the skipping strategy when the historical image frames are within the margin value.

Accordingly, an embodiment herein discloses the HMD device for motion synchronization-based head pose estimation. The HMD device includes a processor, a memory, a SLAM camera, motion sensors, and a motion estimation controller. The motion estimation controller is in communication with the processor, the memory, and the SLAM camera. The motion estimation controller receives motion data from the motion sensors of the HMD device and receives image frames from SLAM camera of the HMD device. Further, the motion estimation controller is arranged to estimate the motion parameters of the head movements from the image frames received from the SLAM camera to generate the filtered subset of motion data received from the plurality of motion sensors based on the motion parameters of the head movements, and to synchronize the image frames received from the SLAM camera and the filtered subset of motion data, and to thereby estimate the head pose based on the synchronized image frames and motion data.

Embodiments described herein is to provide a HMD device and method for motion synchronization-based head pose estimation.

Embodiments described herein is to selectively use IMU data points, and integrate only the selected data points. The selection strategy has a two-fold effect, firstly the error incurred is decreased,as the selected data points are used, and secondly the decrease in amount of data used for integration decreases the computation.

Embodiments herein is to provide a feature aware BA skipping strategy to reduce computation, resulting in higher throughput.

Embodiments herein is to use determined movement flow of a user to guide the IMU sensor-based pose interpolation to increase the pose accuracy.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. According to the present invention there are provided apparatus and methods as set forth in the appended claims. Other features of the invention will be apparent from the dependent claims, and the description which follows.

**Description of Drawings**

The present invention is illustrated in the accompanying drawings, throughout which like reference letters indicate corresponding parts in the various figures. The embodiments herein will be better understood from the following description with reference to the drawings, in which:

FIG. 1A depicts a visual representation of feature points captured in an image through the use of SLAM camera, according to the prior art;

FIG. 1B depicts a visual representation of feature tracking and SLAM camera pose estimation, according to the prior art;

FIG. 2 is a block diagram illustrating a graph-based optimization using sensor fusion and bundle adjustment methods, according to prior art;

FIG. 3 is a block diagram illustrating SLAM camera with selective IMU discarding and feature aware frame skipping, according to an example embodiment as described herein;

FIG. 4A is a block diagram illustrating the predicted pose estimation utilizing a selection strategy, according to an example embodiment as described herein;

FIG. 4B depicts a visual representation of directions of multiple data points for selective pre-integration, according to an example embodiment as described herein;

FIG. 5A is a block diagram illustrating feature aware bundle adjustment to determine refined pose, according to an example embodiment as described herein;

FIG. 5B is a block diagram illustrating the refined pose determination using graph optimization using Levenberg-Marquardt "LM" method, according to an example embodiment as described herein;

FIG. 6A is a schematic illustrating bundling of motion data received from motion sensors and frames received from camera sensors at time Ti-1, according to an example embodiment as described herein;

FIG. 6B is a schematic illustrating bundling of motion data received from the motion sensors and frames received from the camera sensors at time Ti, according to an example embodiment as described herein;

FIG. 7A is schematic illustrating motion flow determination of the SLAM camera at a subsequent timestamp, according to an example embodiment as described herein;

FIG. 7B is a schematic illustrating a comparison between IMU relative pose and extrapolated pose for synchronization motion to estimate head pose in the HMD device, according to an example embodiment as described herein;

FIG. 8 is a schematic illustrating error tolerance determination based on the IMU pre-integrated relative poses and optimized pose, according to an example embodiment as described herein;

FIG. 9 is a flow diagram illustrating selective skipping of bundle adjustment for motion synchronization-based head pose in the HMD device, according to an example embodiment as described herein;

FIG. 10 is a block diagram illustrating the HMD device motion synchronization-based head pose, according to an example embodiment as described herein; and

FIG. 11 is a flow diagram illustrating motion synchronization-based head pose in the HMD device, according to an example embodiment as described herein.

[Mode for Invention]

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. Also, the various embodiments described herein are not necessarily mutually exclusive, as some embodiments can be combined with one or more other embodiments to form new embodiments. The term "or" as used herein, refers to a non-exclusive or, unless otherwise indicated. The examples used herein are intended merely to facilitate an understanding of ways in which the embodiments herein can be practiced and to further enable those skilled in the art to practice the embodiments herein.

As is traditional in the field, embodiments can be described and illustrated in terms of blocks which carry out a described function or functions. These blocks, which can be referred to herein as managers, units, modules, hardware components or the like, are physically implemented by analog and/or digital circuits such as logic gates, integrated circuits, microprocessors, microcontrollers, memory circuits, passive electronic components, active electronic components, optical components, hardwired circuits and the like, and can optionally be driven by firmware and software. The circuits may, for example, be embodied in one or more semiconductor chips, or on substrate supports such as printed circuit boards and the like. The circuits constituting a block can be implemented by dedicated hardware, or by a processor, e.g., one or more programmed microprocessors and associated circuitry, or by a combination of dedicated hardware to perform some functions of the block and a processor to perform other functions of the block.

The accompanying drawings are used to help easily understand various technical features and it should be understood that the embodiments presented herein are not limited by the accompanying drawings.

As such, the present disclosure should be construed to extend to any alterations, equivalents and substitutes in addition to those which are particularly set out in the accompanying drawings. Although the terms first, second, etc. can be used herein to describe various elements, these elements should not be limited by these terms. These terms are generally only used to distinguish one element from another.

In the present description, the terms "frames," "image frames," and "images" are used interchangeably.

The problem at hand is to estimate the precise pose of a user at a given timestamp, while minimizing computational resources. Accurate localization and mapping are crucial for creating an immersive and seamless interactive environment. Although existing methods offer several techniques, they still fall short in terms of throughput and accuracy. To address this challenge, the proposed invention employs a selective processing approach for the IMU frames and incorporates a novel feature-aware skipping methodology to skip the Bundle Adjustment iteration.

The proposed solution aims to achieve two crucial goals - accurate localization and mapping, while simultaneously reducing the overall computation. These factors play a vital role in ensuring seamless AR interaction and navigation in unknown scenes. However, it is equally important to maintain a high throughput, which is precisely what the approach emphasizes. Unlike current methods that solely rely on frequently used IMU-Noise Models to overcome errors, the method employs separate selection strategies, thereby enhancing accuracy and efficiency.

Accordingly, embodiments herein is to disclose a method and HMD device for motion synchronization based head pose. The method includes receiving motion data from motion sensors of the HMD. Further, the method includes receiving image frames from the Simultaneous Localization and Mapping "SLAM" camera of the HMD device and estimating motion parameters of the head movements from the image frames received from the SLAM camera to generate a filtered subset of motion data received from the motion sensors based on the motion parameters of the head movements. Furthermore, the method includes synchronizing the image frames received from the SLAM camera and the filtered subset of the motion data and estimating the head pose based on the synchronized image frames and motion data.

Currently, sensor fusion is employed in HMD devices to derive an optimal transformation of multiple image frames while disregarding erroneous data. The process of constructing 3-dimensional models involves utilizing the sensors embedded in the HMD device to capture multiple images, and determining the position and rotation of the device, as well as image data obtained from extended field of view or depth map data. In contrast to the aforementioned techniques, this disclosure incorporates input from the camera to selectively choose IMU data and synchronize it with the camera frames in a time-efficient manner to accurately estimate the pose.

In certain pre-existing techniques, data from motion sensors and HMD device is utilized to measure the value data sequence and static degree value sequence of the motion sensor within a pre-determined time frame. These techniques address the issue of drifting in motion sensors by determining the deviation attitude and temperature of the sensors. However, this disclosure employs a novel approach by selectively processing image frames obtained from IMU sensors and utilizing a feature-aware skipping method to bypass bundle adjustment. This method for SLAM ensures accurate determination of the user's pose while simultaneously reducing the overall computation required. Consequently, the user experiences a smoother and lag-free interaction, while also optimizing run-time and power consumption.

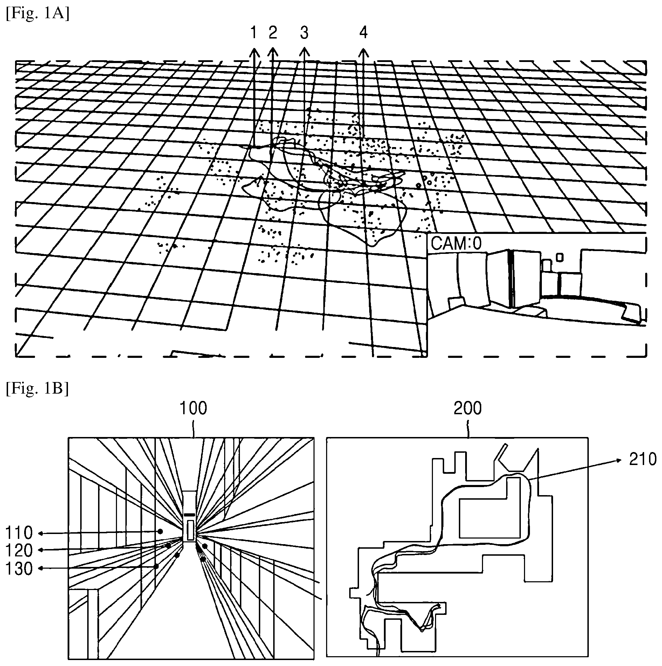

FIG. 1A depicts a visual representation of feature points captured in an image through the use of SLAM camera, according to the prior art;

FIG. 1A shows the feature points within an image through the use of SLAM camera, as per the prior art. The HMD is responsible for determining the position of various objects or features within an environment, which refers to a physical space where it operates. This environment can range from a room, building, street, or any other defined area. By processing data from sensors like cameras, lidar, or depth sensors, the HMD creates and stores an environment map while simultaneously determining the position of the HMD device. The marked points 1, 2, 3, 4 in the images are feature points, while in 3D space, they represent landmarks. Tracks are drawn in a static environment as the camera moves. The pose of a coordinate frame can be described concerning another coordinate frame.

The HMD produces a map that provides a comprehensive spatial representation of the environment, encompassing data on obstacles, surfaces, landmarks, and other relevant features that have been detected and mapped by the HMD. This map remains dynamic and can be updated in real-time as the HMD navigates through the environment. Additionally, the HMD is capable of detecting various objects or features, such as corners, edges, surfaces, key points, descriptors, scale-invariant features, speeded up robust features, and the like.

FIG. 1B depicts a visual representation of feature tracking and SLAM camera pose estimation, according to the prior art;

FIG 1B shows an example of feature tracking 100 and pose estimation 200 in accordance with established techniques. The HMD generates a map that embodies a spatial understanding of the environment. The SLAM cameras are equipped with a variety of sensors, including cameras, accelerometers, gyroscopes, and depth sensors like LiDAR or time-of-flight cameras. These sensors collect data regarding the HMD device's motion and surroundings. The data obtained from the sensors is then processed and combined to estimate the HMD device's position and orientation relative to its starting point.

In analyzing the images or depth data from the cameras, the HMD device identifies distinctive features 110, 120, 130 in the environment, such as corners, edges, or unique patterns. These features are then utilized to track the HMD device's movement 210 and create a map of the environment. By updating the map in real-time, the HMD device can gain a comprehensive understanding of its surroundings.

The HMD device detects loops in the environment, which involves recognizing the HMD device's location, to correct drift errors that can occur over time. Continuously updating the HMD device's position and orientation within the environment, the HMD device plays a crucial role in ensuring the device's accuracy and precision.

In the realm of XR experiences, the HMD device plays a vital role. It allows users to navigate through a virtual environment seamlessly, without any disorientation or discomfort. The HMD device further enhances this experience by enabling users to interact with objects in the same virtual space.

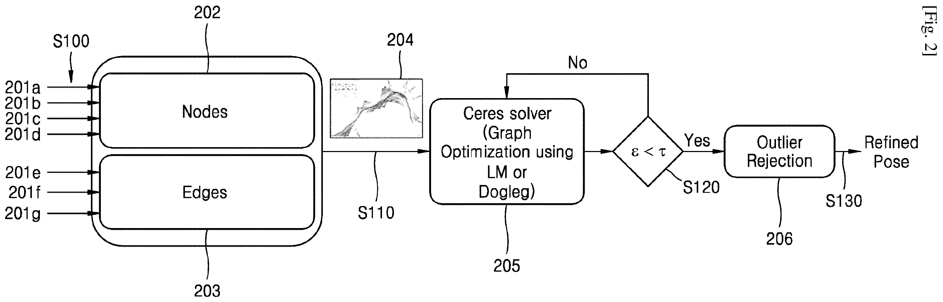

FIG. 2 is a block diagram illustrating a graph-based optimization using sensor fusion and bundle adjustment methods, according to the prior art. Referring to the FIG. 2, the sensor data can be an input to the graph-based optimization model. Due to noise of the sensor data, trajectories may deviate. The graph-based optimization model can be broadly divided into a front-end and a back-end, and the part that generates the pose graph by receiving the sensor data as input is called the front-end, and the front-end accumulates errors due to noise over time. The part that optimizes the accumulated errors is called the back-end, and a method used is called Pose Graph Optimization "PGO". A method of optimizing the pose of the user and map point at the same time is called Bundle Adjustment "BA".

The block diagram includes nodes 202, edges 203, non-linear optimization 205, and outlier rejection 206 components. At S100, the inputs required for the nodes 202 are pose data of the user, velocity and biases 201b, gyroscope data 201c, and inverse landmark depth 201d. The inputs required for the edges 203 are visual factors, for example 2D projections 201e, IMU integrated factor 201f, and marginalization factor 201g. A factor graph 204 includes nodes 202 and edges 203. The non-linear optimizer performs non-linear optimization.

At S110, the factor graph 204 as shown is another type of graph-based optimization technique similar to pose graph-based techniques. A factor graph 204 consists of variables and factors where factor represents functions on subsets of the variable and edges 203 are defined between variable and factor and edge 203 indicates dependency of a particular factor on a particular variable. The particular variables can be, but is not limited to, a pose variable, and/or a landmark variable. The pose variable represents the position and orientation of the camera at different points in time or different keyframes. Each pose variable is associated with a specific timestamp or keyframe. The landmark variable represents the positions of distinctive features or landmarks in the environment. The landmarks are often detected and tracked by the HMD device over time, and stored in memory. The particular factors can be projection factors, odometry factors, loop closure factors, IMU factors, calibration factors, and the like. The projection factors model relationship between the HMD device and the projected position of the landmarks in the images. The factors relate the 3D positions of the landmarks to the 2D image coordinates observed by the camera. The odometry factors represent the motion constraints between consecutive camera poses. The odometry factors represent transformation between poses obtained from visual odometry.

At S120, the non-linear optimization is performed on the factor graph 204, all the 3D landmarks with re-projection error over the threshold are removed. In current SLAM, the bundle adjustment is used for all the frames that tries to refines the pose of each and every frame. The BA is computation expensive as the BA tries to solve a non-linear optimization problem, which takes nearly half of the overall processing time, that is nearly 50%.

At S130, the outliers are rejected after the non-linear optimization is performed on the factor graph 204, all the 3D landmarks with re-projection error over the threshold are removed ($\varepsilon < \tau$).

At S130, the refined pose is output.

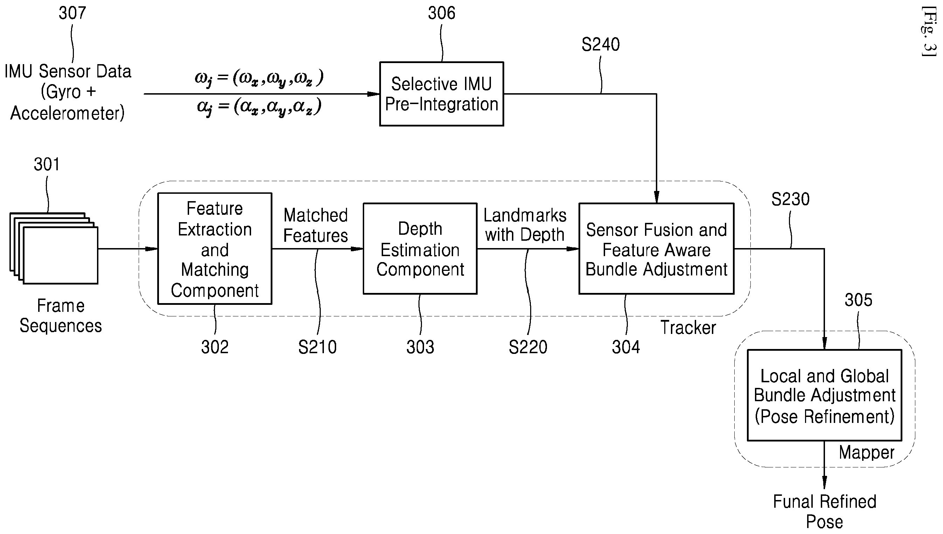

FIG. 3 is a block diagram illustrating SLAM camera with selective IMU discarding and feature aware frame skipping, according to an example embodiment. The SLAM camera is part of an HMD 1000 as described in more detail below. The block diagram includes feature extraction and matching component 302, depth estimation component 303, Sensor Fusion and Feature Aware Bundle Adjustment (BA) 304, Selective IMU Pre-Integration 306, and local and global BA 305. The frame sequences 301 are given as input to the feature extraction and matching component 302.

At S200, the image frames are received from the memory 1003 of the HMD device 1000 along with the motion data from the motion sensor of the HMD device 1000 to estimate motion parameters of the head movements from the image frames. The HMD device 1000 captures and stores inertial data 307 and visual data. The inertial data 307 is used for HMD device pose estimation. The inertial data 307 provides high-frequency inertial readings from mechanical sensors such as gyroscopes, accelerometers and the like. The inertial data 307 is independent of visual data. The visual data is used for device pose estimation and the visual data provides reliable visual features in a scene and can maintain long-term information as visual landmarks in maps and also supports re-localization by loop closure in a mapper. The inertial data 307 do not support re-localization, cannot maintain long-term information and inertial sensors are noisy. The visual data depends on visual features and lighting conditions and the visual data is received at a much lower frequency. Therefore, the HMD device 1000 uses both IMU sensor's inertial data 307 and the visual data from the SLAM camera 1003 for device pose estimation. Integrating both the inertial data 307 and the visual data provides high-frequency inertial readings and uses reliable visual features in the scene to optimize the poses and also maintains long-term information in the map for re-localization in a mapper.

At S210, the feature extraction and matching component 302 identifies distinctive patterns or features in sensor data that can be used as reference points for mapping and localization. The types of features can be corners, edges, key points, descriptors and the like. The feature extraction and matching component 302 is arranged to find corresponding features in different frames. The feature extraction and matching component 302 associates the features extracted from one frame with counterparts in other frames. Once the feature extraction and matching are done, depth estimation is performed.

At 220, depth is for example determined by analyzing disparity between the feature positions in the left and right images and the depth can be determined using triangulation. The disparity values are used along with a known baseline, distance between the camera, to determine the depth values. The depth estimation is alternatively or in addition performed by the depth estimation component 303 by analyzing the motion of features across consecutive frames. The amount of motion is used to infer the depth of objects. As features are tracked, the relative motion between frames can be used to estimate depth. The depth is alternatively, or in addition determined from defocus based on the amount of defocus observed in the images. The objects at different distances produce different degrees of blur that is be used to infer the relative depths.

At S230, the output from the multiple sensors is combined to obtain a more accurate and reliable estimation of the environment of the HMD device 1000 using sensor fusion and BA component 304 in a Tracker, as equation a (Eq(a)).

$$P_j^{refTracker} \in \{X_j', Y_j', Z_j', Q_{xj}', Q_{yj}', Q_{zj}', Q_{wj}'\} \text{ --- Eq(a)}$$

The sensor fusion compensates individual sensors to improve the accuracy of measurements, and thus provides more comprehensive understanding of the environment. Bundle adjustment is an optimization technique used to refine the estimated parameters of a 3D scene, camera poses and 3D points, to minimize the error between observed features and corresponding projections in the images. Final refined poses are obtained by local and global bundle adjustment "BA" 305 in a mapper, as equation b (Eq (b).

$$P_j^{refMapper} \in \{X_j', Y_j', Z_j', Q_{xj}', Q_{yj}', Q_{zj}', Q_{wj}'\} \text{ --- Eq(b)}$$

At S240, both the inertial data and the visual data are pre-integrated (306), gyroscope and accelerometer data. This provides high-frequency inertial readings and uses reliable visual features in the scene to optimize the poses and also maintains long-term information in the map for re-localization in mapper, as equation c (Eq(c)).

$$P_j^{pred} \in \{X_j, Y_j, Z_j, Q^x{}_j, Q^y{}_j, Q^z{}_j, Q^w{}_j\} \text{ --- Eq(c)}$$

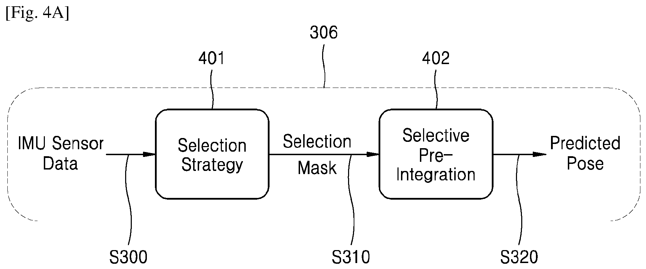

The motion data from the motion sensors and image frames from the memory 1002 are received to estimate the motion parameters of the head movements from the image frames. A filtered subset is generated, of motion data received from the motion sensors based on the motion parameters of the head movements. The image frames received from the memory 1002 and the filtered subset of the motion data are synchronized to estimate the head pose based on the synchronized image frames and motion data. The motion data is received by selecting from the motion sensors based on a selection strategy and pre-integrating the motion data from the sensor data based on the selection strategy. The selection strategy is described in more detail below, as selection strategy 401 in FIG. 4A. A predicted pose of the user wearing the HMD device 1000 is determined by pre-integrating the motion data from the sensors. The pre-integration is described herein as equation d (Eq(d)), equation e (Eq(d)), equation f (Eq(f)):

$$P_j^{pred} \in \left\{X_j, Y_j, Z_j, Q^x{}_j, Q^y{}_j, Q^z{}_j, Q^w{}_j\right\} - Pose\ (Translation\ (1\ x\ 3),\ Rotation\ (1\ x\ 4))\ ---\text{Eq(d)}$$

Pred - IMU Predicted Pose

refTracker - Refined Tracker Pose

refMapper - Refined Mapper Pose

$$f_i^j = (x_i,\ y_i)\ \leftrightarrow f_n^m = (x_n,\ y_n)\ ----\ \text{Eq(e)}$$

Where $i^{th}$ feature in $j^{th}$ frame is matched with $n^{th}$ feature in $m^{th}$ frame.

$$L_i^j = (x_i,\ y_i, z_i)\ ---\ \text{Eq(f)}$$

Where $i^{th}$ landmark in $j^{th}$ frame.

The SLAM determines the pose, position and orientation, of the user, using the memory 1002 image frames and the IMU sensor data. The processor 1001 of the HMD 1000 processes visual data and IMU sensor data in parallel to determine head pose of the user in the HMD device 1000. The IMU sensor data consists of gyroscope that provides angular velocity ($w_x, w_y, w_z$) and accelerometer data that provides acceleration data ($a_x, a_y, a_z$) 306. The image frames are passed through a feature extraction and matching component 302 to detect and extract features from the scene. The detected features are searched over multiple frames in time to find repeatable matched feature pairs. The frames that provide matched feature pairs are transmitted to the depth estimation component 303 to determine the depth of the feature points. The depth is used to bring the 2D feature points to 3D images as 3D landmarks. The 3D landmarks are the initial reference of the user in 3D space derived from vision information. The 3D landmark coordinate is with respect to user position. Finally, the initial prediction provided by IMU pre-integration and 2D-3D feature-landmark pairs are combined together to get refined pose, at S4. The initial reference is determined by vision data. The local and global BA 305 is used to refine the predicted poses from the IMU and vision. The BA is an iterative process where best pose is determined based on re-projection error. Re-projection error is an estimated 3D point projected to 2D plane. Distance between true 2D point and the point which is projection of 3D. The best pose is where re-projection error is minimum.

FIG. 4A is a block diagram illustrating the predicted pose estimation utilizing a selective IMU pre-integration 306, according to the embodiments herein. The predicted pose estimation method includes selection strategy 401 and selective pre-integration 402.

At S300, the selection strategy 401 includes selecting IMU data points that are used for pre-integration. The selected data point from the gyroscope sensor and accelerometer sensor are pre-integrated to estimate the relative rotation, velocity and position. The IMU data points are selectively used and integrate only the selected data points. The selection strategy 401 has a two-fold effect: firstly, the error incurred is decreased as the selected data points are used; and secondly, the decrease in amount of data used for integration decreases the computation.

At S310, the bundle adjustment is selectively used for specific frames based on the features detected in each frame. The bundle adjustment takes around 50% of overall per frame computation. The selective pre-integration 402 predicts the user movement flow using the data points from previous frames. The estimated flow is transmitted to selection strategy component 401 to select IMU data points that can be used for selective pre-integration 402.

At S320, the selected data points from the gyroscope sensor and the accelerometer sensor are pre-integrated to estimate relative rotation, velocity and position. Finally, predicting the initial pose of the user is achieved by multiplying with last frame's refined pose.

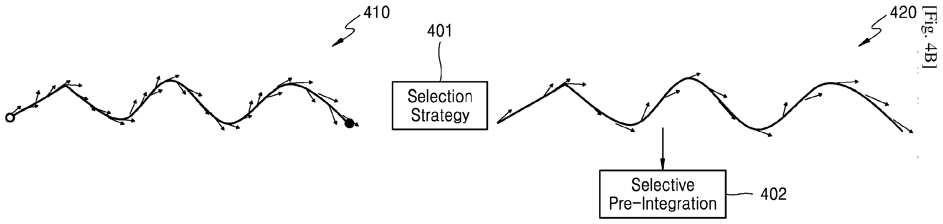

FIG. 4B depicts a visual representation of directions of multiple data points for selective pre-integration, according to the embodiments herein. Referring to FIG. 4B, the example for the selection Strategy 401 and selective pre-integration 402. 410 shown in the FIG. 4B indicates ground truth path 411 and the IMU data point that were not selected. 410 also indicates predicted pose 430 and mapped pose 440. Equation h (Eq(h)) represents predicted pose 430, $P_o$ and equation i (Eq(i)) represents mapped pose 440, $P_1$.

$$P_o \in \{X_0, Y_0, Z_0, Q^x{}_0, Q^y{}_0, Q^z{}_0, Q^w{}_0\}\ ---\ \text{Eq(h)}$$

$$P_1 \in \{X_1, Y_1, Z_1, Q^x{}_1, Q^y{}_1, Q^z{}_1, Q^w{}_1\}\ ---\ \text{Eq(i)}$$

420 shown in the FIG. 4B indicates the ground truth path and IMU data points selected by the selection strategy 401.

The selected IMU data in the 420 are pre-integrated by the selective pre-integration 402.

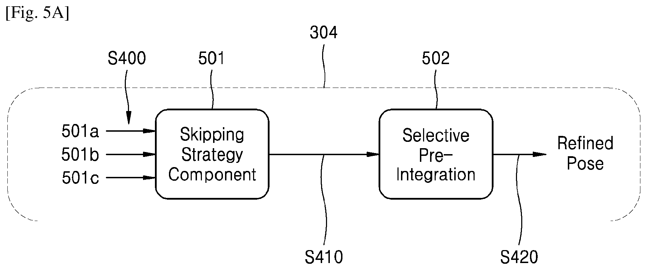

FIG. 5A is a block diagram showing sensor fusion and feature aware bundle adjustment 304 to determine refined pose, according to the embodiments herein. The sensor fusion and feature aware bundle adjustment 304 includes skipping strategy component 501 and feature aware bundle adjustment 502.

At S400, the input to the skipping strategy component 501 is frame features 501a, solver landmarks 501b, and predicted IMU pose 501c. The skipping strategy 501 determines the re-projection error for each landmark in the solver state and uses a skipping strategy 501 that is based on the re-projection error.

At S410, based on correction information from previous frames, it is decided whether to run the bundle adjustment. Skipping the bundle adjustment uses the IMU pose determined using selective IMU integration as the final pose for the skipping strategy frame.

At S420, the refined pose is obtained based on the feature aware bundle adjustment 502.

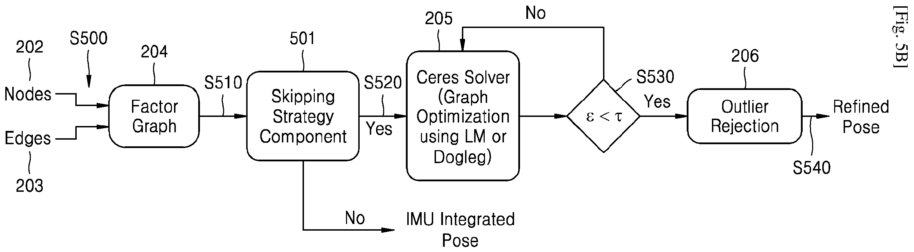

FIG. 5B is a block diagram illustrating the refined pose determination using graph optimization using LM method, according to the embodiments herein. The LM method includes factor graph 204, skipping strategy component 501, the ceres solver 205 and outlier rejection 206.

At S500, the Levenberg-Marquardt "LM" method is the optimization method for solving non-linear least squares problems. The factor graph 204 is a graphical representation used in probable graphical models. The nodes 202 represent variables and edges 203 represent the constraints or factors that relate to the variables.

At S510, in the SLAM, a factor graph 204 can be used to represent the relationship between camera poses, landmark positions, and observed features. The factors may include constraints from the sensor measurements, motion models, loop closures and the like. The LM is an iterative optimization method used to minimize a non-linear least squares objective function. At each iteration, LM determines a step direction that minimizes the objective function in a quadratic approximation. The LM uses a damping parameter to balance between steepest descent and Gauss-Newton steps. The LM is used to refine the estimated camera poses and landmark positions based on the observed features and constraints.

At S510, in the factor graphs 204, skipping strategy involves selectively choosing which factors to include in the optimization at each iteration. The skipping strategy is used to reduce the computational complexity and increase the optimization process. Less critical or less informative factors can be skipped to focus computational resources on more important constraints. The skipping strategies can be based on factors such as the strength of the constraint, the uncertainty associated with measurements, or the relative importance of different types of constraints.

At S520, the ceres solver 205 employs an open-source library for solving large-scale non-linear optimization problem. The ceres solver provides an efficient and flexible framework for performing LM optimization. The ceres solver can be used to implement and solve the factor graph optimization problem efficiently.

At S530, outlier rejection 206 includes identifying and discarding measurements or constraints that are likely to be erroneous or inconsistent with the rest of the data. Outlier rejection 206 is used to maintain the accuracy and reliability of the optimization process, especially in the presence of noisy or incorrect sensor measurements. Outlier rejection can be applied to measurements from cameras, IMUs, or other sensors to ensure that only high-quality data is used for pose and landmark estimation.

At S540, the BA is used for all the frames that tries to refine the pose of each and every frame.

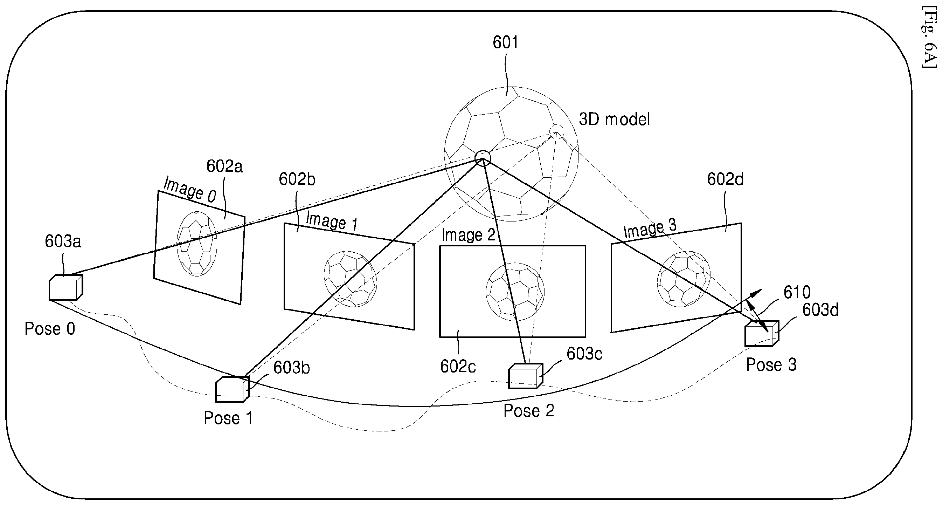

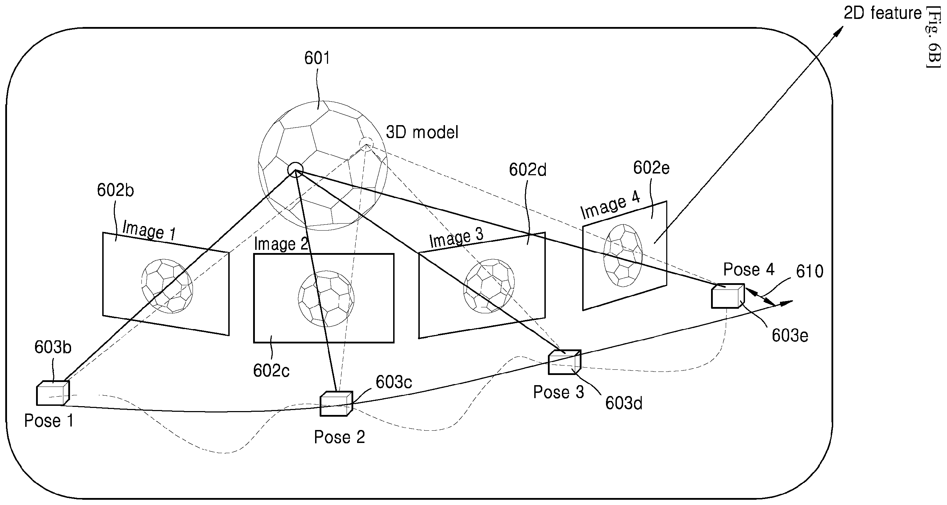

FIG. 6A is a schematic illustrating bundling of motion data received from the motion sensors and frames received from the camera sensors at time Ti-1, according to the embodiments herein. FIG. 6B is a schematic illustrating bundling of motion data received from motion sensor and frames received from camera sensors at time Ti, according to the embodiments herein.

The FIG. 6A includes the 3D pose 601 indicating the 3D landmark and the view of the 3D landmark from various directions 602a, 602b, 602c, 602d. The HMD device 1000 is in different places and different poses 603a, 603b, 603c, 603d. Pose 3 603d is the pose correction after bundling.

The FIG. 6B includes the 3D pose 601 indicating the 3D landmark and the view of the 3D landmark from various directions 602b, 602c, 602d, 602e. The HMD device 1000 is in different places and different poses 603b, 603c, 603d, 603e. Pose 4 603e is the pose correction after bundling.

The method of bundling takes data from motion sensors and frames from camera sensors to perform refinement of the pose estimated by minimizing the re-projection error of the 3D Landmarks. At Time T-1, the bundling is performed using $P_{camera}^{i-4}$, $P_{camera}^{i-3}$, $P_{camera}^{i-2}$ as the reference and $P_{camera}^{i-1}$ was refined. At Time T, i.e. Next Timestamp, the bundling was performed using $P_{camera}^{i-3}$, $P_{camera}^{i-2}$, $P_{camera}^{i-1}$ as reference and $P_{camera}^{i}$ was refined. The re-projection error measures the distance between the re-projection of a 3D landmark and its corresponding true 2D projection on image frames. $P_{camera}^{i}$ : Pose of Camera at Timestamp $T_i$

The current approach to bundling involves utilizing both motion sensor and frame sensor data. However, in situations where the visual features are poor, reliance solely on motion sensor data proves to be highly noisy. Consequently, bundling of motion data fails to provide accurate refinement, and if such conditions persist, errors accumulate, leading to divergent bundling states. On the other hand, scenes with good visual features require the minimization of projections for a greater number of features, leading to slower frame rates. To avoid this, the existing method does not run bundling until convergence, instead opting to run it for a few iterations before stopping. Unfortunately, this introduces errors in refined poses.

In example embodiments of the present invention, the module utilizes the pose acquired from the IMU data points and 2D to 3D features, along with landmark pairs, to align two trajectories. This process enables the predicted tracks from the IMU to serve as the initial user pose directly.

In an embodiment, re-projection error 610 in pose estimation is determined by averaging the re-projection error from the landmarks present in the bundler with the projections in the image frames. The re-projection error 610 measures the distance between the re-projection of a model estimation and corresponding true projection in an equation j (Eq(j)). The re-projection error 610 can be minimized in an equation k(Eq(k)).

$$Pose\ Error\ =\ \frac{1}{\#Projections}\ \times\ \sum(Re - projection\ error) - \text{Eq(j)}.$$

Where $\hat{p}$ is re - projection

p is true projection

$$\text{minimization term}:\ \min_{P_j, \vec{p}_i} \sum_{i=1}^{n} \sum_{j=1}^{m} v_{ij} \left\| K P_j \vec{p}_i - \vec{x}_{ij} \right\|_2$$

$$\text{-Eq(k)}.$$

Where K is correction.

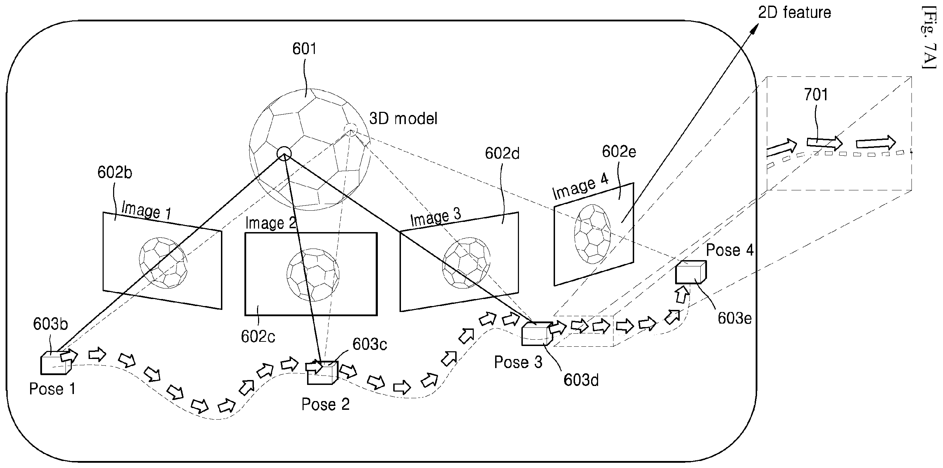

FIG. 7A is a schematic figure showing motion flow determination of the SLAM camera at the subsequent timestamp, according to the embodiments herein. The representative diagram gives an overview of the flow using previous optimized pose data is extrapolated for subsequent timestamp dT.

$$V_{i-1} = \int_{i-K}^{i} (a_x^i, a_y^i, a_z^i)$$

$$\omega_{i-1} = \frac{1}{K} \times \sum_{n=(i-K)}^{i-1} \omega_n$$

$$\Delta_i^{rot} = \omega_{i-1} \times dT$$

$$\Delta_i^{trans} = V_{i-1} \times dT$$

$$error_{avg} = \frac{1}{\#Split} \times \sum(Disparity\ in\ Estimated\ \&\ Raw)$$

Referring to FIG. 7A, flow of the optimized pose data using previous optimized pose data is shown. The 3D model 601 and the view of the 3D landmark from various directions 602b, 602c, 602d, 602e is described in FIG. 7A. The HMD device 1000 is in different places and different poses 603b, 603c, 603d, 603e. Pose 4 603e is the pose correction after bundling. The arrows 701 shown in FIG. 7A represent the direction of the motion flow determined by extrapolating the flow for the smaller timestamps.

That is, the arrows ($\rightarrow$) represent motion flow determined by extrapolating the flow for smaller timestamps using the information from previously determined pose and direction of motion from last K data points from motion data.

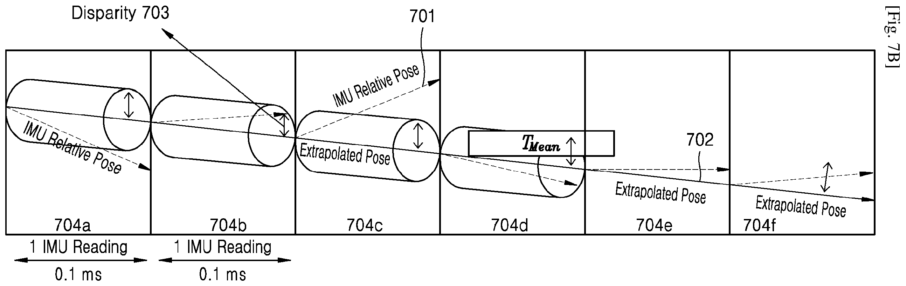

FIG. 7B is a schematic figure showing the comparison between IMU relative pose and extrapolated pose for synchronization motion to estimate head pose in the HMD device 1000, according to the embodiments herein.

Referring to FIG. 7B, the IMU relative pose 701 and extrapolated pose 702 are compared. The IMU relative pose 701 refers to the pose change, translation and rotation, of the HMD device 1000 between two consecutive IMU measurements. The relative pose 701 can be determined by integrating the IMU readings over a short time interval using the method such as double integration of acceleration for translation and integration of angular rates of rotation 704a, 704b. The IMU relative pose 701 bridges the time gap between successive camera frames, providing continuous motion information. In visual-inertial SLAM, the IMU relative pose 701 is used to predict the HMD device's motion between the camera frames. The prediction maintains accurate and smooth localization. The extrapolated pose 702 is an estimated pose of the device at a specific point in time, based on the integration of IMU measurements from a known starting state. The extrapolated pose 702 involves propagating the initial pose forward in time by integrating IMU data. The process incorporates both translational and rotational changes 704c. The extrapolated pose 702 provides a continuous estimate of the HMD device's motion.. The extrapolated pose 702 is a prediction of the device's pose at any given time. The extrapolated poses 702 are particularly useful in scenarios where camera updates are infrequent or temporarily unavailable, ensuring the HMD device 1000 can maintain accurate localization over extended periods. An IMU reading is considered with a timestamp of 0.1ms. Given the $V_{i-1}$ and $\omega_{i-1}$, the expected rotation and translation is predicted in upcoming timestamp. The dotted line, IMU relative pose, shown in FIG. 7B is a predicted movement determined by applying predicted change $\Delta_i^{rot}$ and $\Delta_i^{trans}$ to V and $\omega$ determined for previous timestamp. When the disparity between the predicted motion and current motion is higher than the determined tolerance or threshold, the IMU reading is discarded and not considered for pre-integration 704a, 704c given that time motion of the user is not abrupt and that the current motion and previous motion is completely different. Hence, when the predicted motion varies a lot from the raw data, then the predicted motion includes high error rates and can be discarded.

The IMU data is timestamped. The synchronization involves associating IMU measurements with the closest available memory (1002) frames in time, with interval 0.1ms. The IMU relative pose 701 is used to predict the HMD device's motion between the image frames, ensuring consistent motion mode. The synchronization ensures the IMU motion information is integrated into the memory 1002, leading to accurate pose estimations and a more robust localization. By combining the IMU relative pose 701 and extrapolated pose 702 with the SLAM camera measurements, a visual-inertial SLAM camera can provide accurate and continuous localization and mapping even in environments with sparse or intermittent visual features.

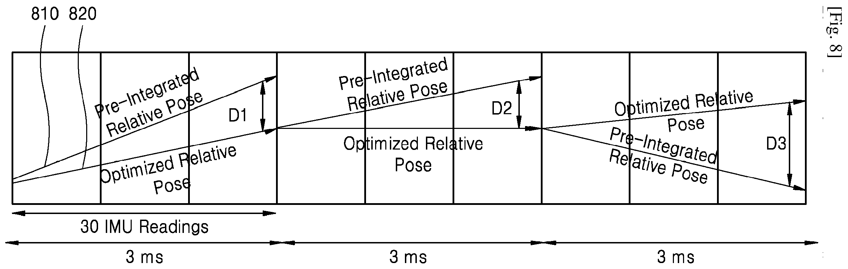

FIG. 8 is a schematic figure showing error tolerance determination based on the IMU pre-integrated relative poses and optimized pose, according to the embodiments herein.

Referring to FIG. 8 in reference to FIG. 7B, the error tolerance or threshold is determined based on the previously determined IMU pre-integrated poses 810 and the optimized relative pose 820. The error tolerance represents an acceptable amount of noise in the IMU data that is handled by the BA optimizer. The deviation $D_i$ is the deviation or error between previously optimized pose 810 and the pre-integrated poses 820 at the ith camera frame$_i$. The estimated tolerance $T_i$ for each IMU reading in the pre-integrated set of readings for Frame$_i$ is determined by dividing by the number of IMU readings integrated. The final $T_{Mean}$ is an average across a number of previous poses and a boundary in all directions is created with radius of $T_{Mean}$ to discard or accept the IMU readings for the final Pre-Integration.

$D_i$ = Deviation of Pre-Integrated Pose from Optimized pose for Frame$_i$

$Tolerance_i = D_i$ / number of IMU Readings

$$T_{Mean} = \frac{1}{\text{number of } Poses} \times \sum (Tolerance\ at\ pose_i)$$

$$V_{i-1} = \int_{i-K}^{i} (a_x^i, a_y^i, a_z^i)$$

Where velocity at $(i-1)^{th}$ timestamp, determined using previously selected K points.

$$\omega_{i-1} = \frac{1}{K} \times \sum_{n=(i-K)}^{i-1} \omega_n$$

Where average Angular Velocity at $(i-1)^{th}$ timestamp determined using previously selected K points

$$\Delta_i^{rot} = \omega_{i-1} \times dT$$

Predicted Change in rotation in $i^{th}$ timestamp

$$\Delta_i^{trans} = V_{i-1} \times dT$$

Predicted Change in translation in $i^{th}$ timestamp.

Given the $V_{i-1}$ and $\omega_{i-1}$, the expected rotation and translation is predicted in upcoming timestamp. The dotted line, IMU relative pose, in FIG. 7B is a predicted movement determined by applying predicted change $\Delta_i^{rot}$ and $\Delta_i^{trans}$ to V and $\omega$ determined for previous timestamp. When the disparity between the predicted motion and current motion is higher than the determined tolerance or threshold, the IMU reading is discarded and not considered for pre-integration given that time motion of the user is not abrupt and that the current motion and previous motion is completely different. Hence, when the predicted motion varies a lot from the raw data, then the predicted motion includes high error rates and can be discarded.

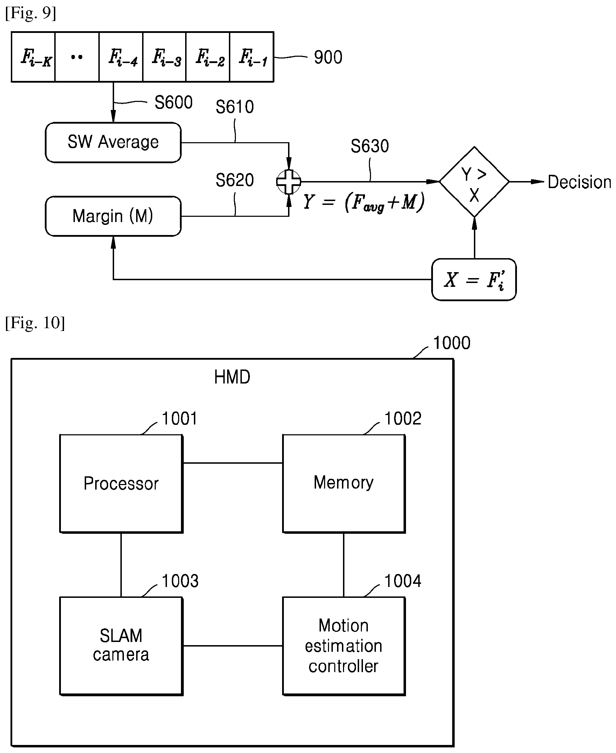

FIG. 9 is a flow diagram illustrating the selective skipping of the bundle adjustment for motion synchronization-based head pose in the HMD device 1000, according to the embodiments herein.

At S600, sliding window 900 stores the amount of residual correction performed in last K frames bundle adjustment iteration per feature ($F_{i-K}$, ... $F_{i-4}$, $F_{i-3}$, $F_{i-2}$, $F_{i-1}$).

$$\left[ F_j = \frac{1}{N} \times \left( E_{optimized}^j - E_{unoptimized}^j \right) \right] - \text{Per Feature Cost in } j^{th} \text{ frame}$$

Where N - Number of Detected features in the frame.

Where E - Total Re-projection Error in bundle adjustment "Solver Residue"

At S610, the BA iteration keeps track of corrections for last K frames and for each frame average correction is determined, denoted as $F_{avg}$.

$$F_{avg} = \frac{1}{(K-1)} \times \sum_{j=i-K}^{i-1} F_j - \text{frame average correction in K frames}$$

At S620, a Margin(M) is determined denoted as $M$.

$$[M = \lambda \times F'_i] - \text{Margin in } i^{th} \text{ frame}$$

Where $\lambda$ is penalizing percentange,

$$F'_i = \frac{1}{N} \times \left( E_{optimized}^i - E_{unoptimized}^i \right) - \text{feature increase in } i^{th} \text{ frame}$$

Where $E_{optimized}^i$ - Total Residual After performing bundle adjustment.

Where $E_{unoptimized}^i$ - Total Residual Before performing bundle adjustment.

Where N - Number of features detected in $i^{th}$ frame.

The margin denotes the accepted tolerance, determined as percentage of the current per feature increase in error.

At S630, when the increase in feature error, X is within the average correction applied in K frames + Margin(M), Y, the BA can be skipped.

First iteration camera frames and complete IMU data is used to run the method in question and error is determined that is $\varepsilon_1$. In second iteration, the selection strategy 401 is used. The camera frames and selected IMU data to be used to run the method in question and error is determined that is $\varepsilon_2$. When in first iteration the method is using the selection strategy 401, and use the same subset of IMU data used in second iteration and difference in error determined in first iteration from the error in second iteration is small that is $(e_1 - e_2) < \varepsilon$.

In first iteration, the method in question is run using the IMU integrated pose and camera frames and the overall processing time of the method T1 is determined. In second iteration, the method in question is run using ground truth pose and camera frames and overall processing time of the method T2 is determined. When the method in question uses the skipping strategy, since the method uses the average feature error incurred, the error incurred in GT will be negligible hence the BA iteration is skipped for all the image frames, post initial initialization is complete. Since, BA is skipped for all the frames, T2 is smaller than T1.

FIG. 10 is a block diagram illustrating the HMD device 1000 arranged to perform methods of motion synchronization-based head pose estimation, according to the embodiments herein. The HMD device 1000 can be but not limited to a wearable device Augmented Reality "AR"/ Virtual Reality "VR" accessory, an Internet of Things "IoT" device, a VR device, AR device, mixed reality devices, handheld AR/VR device, immersive pods and treadmills, spatial computing device, a display device and an immersive system.

In the example embodiment illustrated, the HMD device 1000 includes a memory 1002, a processor 1001, a SLAM camera 1003, and a motion estimation controller (1004.

The memory 1002 stores instructions to be executed by the processor 1001. The memory 1002 includes, in the example illustrated non-volatile storage elements. Examples of such non-volatile storage elements can include magnetic hard discs, optical discs, floppy discs, flash memories, or forms of electrically programmable memories "EPROM" or electrically erasable and programmable "EEPROM" memories. In addition, the memory (1002) may, in some examples, be considered a non-transitory storage medium. The term "non-transitory" can indicate that the storage medium is not embodied in a carrier wave or a propagated signal. However, the term "non-transitory" should not be interpreted that the memory 1002 is non-movable. In some examples, the memory 1002 stores larger amounts of information. In certain examples, a transitory or non-transitory storage medium stores data that can, over time, change, e.g., in Random Access memory "RAM" or cache.

The processor 1001 optionally includes one or a plurality of processors. The one or the plurality of processors can be a general-purpose processor, such as a central processing unit "CPU", an application processor "AP", or the like, a graphics-only processing unit such as a graphics processing unit "GPU", a visual processing unit "VPU", and/or an AI-dedicated processor such as a neural processing unit "NPU". The processor (1001) can include multiple cores and executes the instructions stored in the memory (1002).

The SLAM camera 1003 is a device equipped with integrated sensors and processing capabilities that enable the HMD 1000 to perform real-time mapping of an environment while simultaneously determining the position within that environment. The SLAM camera 1003 includes hardware components such as camera, IMU, depth sensor, processor unit, memory, a power source, connectivity, synchronization hardware, heat dissipation and cooling, enclosure, mounting hardware, and environmental sensors.

The motion estimation controller 1004 receives data from various sensors, processes the received data to determine the position, orientation, velocity and the like. The multiple motion sensors in the motion estimation controller 1004 receives motion data and the image frames are received from the memory 1002 to estimate the motion parameters of the head movements of the user from the image frames received from the memory 1002.

The image frames are interchangeably referred as visual data, image frames in the specification.

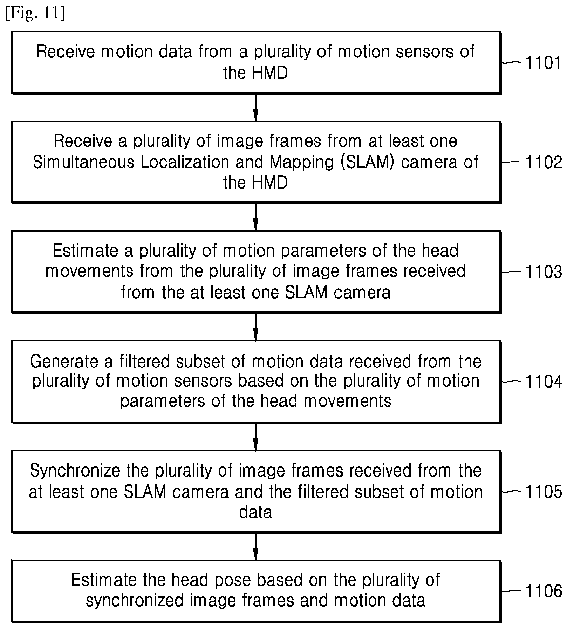

FIG. 11 is a flow diagram illustrating motion synchronization-based head pose in the HMD device 1000, according to the embodiments herein.

At 1101, motion data from the multiple motion sensors of the HMD device 1000 are received. The motion data from the multiple motion sensors are selected based on the selection strategy 401 and the motion data is pre-integrated from the sensor data to determine a predicted pose of the user wearing the HMD device 1000.

In an embodiment, the image frames, landmarks, and the predicted pose of the user wearing the HMD device 1000 are received to determine the refined pose for the image frames based on the skipping strategy, landmarks, and the predicted pose of the user wearing the HMD device 1000.

The landmarks are the 3D points in a real world for the 2D image features in the image.

In another embodiment, a threshold for the pre-integrated motion data and the refined pose frame is determined and the threshold is the amount of noise in the motion data. A deviation in the threshold between the pre-integrated motion data and the refined pose frames are determined to identify a boundary of the refined pose frames in the directions based on the deviation in the threshold. Further, determining whether the boundary of the refined pose frames in the directions is greater than the threshold and pre-integrating the motion data when the boundary of the refined pose frames in the directions less than the threshold.

The pre-integrated motion data is received when the boundary of the refined pose frames in the multiple directions in less than the threshold and the determining the amount of threshold beyond the boundary of the refined pose frames for the multiple image frames of the refined pose frames. A margin value for the threshold beyond the boundary of the refined pose frames are determined and selecting the skipping strategy when the multiple historical image frames are within the margin value.

The method for SLAM maintains the accuracy in determining pose of the user while reducing the overall computation required and hence increases the throughput and gives the user the smoother and lag-free experience. The present invention results in run-time and power optimization.

At 1102, the multiple image frames are received from the memory 1002 of the HMD device 1000.

At 1103, the motion parameters are estimated from the multiple image frames received from the memory 1002.

At 1104, a filtered subset of motion data received from the motion sensors are generated based on the motion parameters of the head movements.

At 1105, the multiple image frames received from the memory (1002) and the filtered subset of motion data is synchronized.

At 1106, the head pose based on the synchronized image frames and motion data is estimated.

The proposed solution provides SLAM which maintains the accuracy while reducing the overall computation required and hence increases the throughput and gives user a smoother and lag-free experience. The present invention results in run-time and power optimization

The precise interaction with virtual objects or other users within a virtual or augmented environment necessitates an accurate estimation of head movement, as well as the user's motion within the scene. To ensure a seamless user experience, an AR/VR headset requires a SLAM with a higher throughput. The proposed solution provides a pose with a higher throughput, surpassing the capabilities of currently available SLAM engines. The proposed solution using low power is preferable as it reduces device heating and prolongs battery life. The proposed solution focuses on enhancing accuracy while also reducing power consumption, resulting in an elongated battery life, a decrease in the maximum device temperature, and an improved user experience.

The present invention's technical worth lies in its ability to facilitate seamless interaction within the metaverse or with other virtual or augmented objects, while imposing minimal computational overhead. This feature is particularly significant as it addresses the pressing need to reduce power consumption and enhance device longevity from the user's standpoint.

The value of the proposed invention lies in its potential to be integrated into the VST as a core in SLAM. This would effectively reduce power consumption and is currently being evaluated for commercialization.

The proposed method and HMD device 1000 distinguish themselves from conventional methods and HMD devices by employing selective approaches to minimize computation, while maintaining accuracy. While existing methods utilize all IMU data points for pre-integration and refine the pose for all frames, the proposed method is more efficient and effective in its approach.

In an embodiment, when implemented, the proposed solution can be detected, by conducting two iterations of the method in question. In the first iteration, the method runs with all the IMU sensor data and camera frames, and determine the resulting error $\varepsilon 1$. In the second iteration, the proposed solution employs a selection strategy and filters the IMU data before running the method with the filtered subset and camera frames, and determine the resulting error $\varepsilon 2$. When the method in question is using the selection strategy, it will internally select the same subset of IMU data used in the second iteration during the first iteration as well. Consequently, the difference in error is determined in the first iteration from the error in the second iteration will be negligible, i.e., $e1-e2 < \varepsilon$, indicating that the proposed solution.

In one embodiment, detection of the proposed solution can be achieved by implementing the relevant method with Ground Truth Pose data. This will result in a negligible increase in average feature error for the current frame, and all subsequent frames will be skipped. Therefore, if a reduction in overall processing time is observed for the same data, but with a change only in the predicted pose, it can be inferred that a skipping strategy of the proposed solution has been employed.

**Claims**

1. A method for motion synchronization-based head pose estimation, by a Head Mounted Display, "HMD", device (1000), comprising: receiving, by the HMD device (1000), motion data from a plurality of motion sensors of the HMD device (1000); receiving, by the HMD device (1000), a plurality of image frames from at least one Simultaneous Localization and Mapping, SLAM, camera of the HMD device (1000);
**characterised by** further comprising:

   estimating, by the HMD device (1000), a plurality of motion parameters of head movements of a user from the plurality of image frames received from a memory (1002);
   generating, by the HMD device (1000), a filtered subset of the motion data received from the plurality of motion sensors based on the plurality of motion parameters of the head movements;
   synchronizing, by the HMD device (1000), the plurality of image frames received from the memory (1002) and the filtered subset of the motion data; and
   estimating, by the HMD device (1000), the head pose based on the synchronized plurality of image frames and motion data.

2. The method as claimed in claim 1, wherein receiving, by the HMD device (1000), the motion data from the plurality of motion sensors of the HMD device (1000), comprises:

selecting, by the HMD device (1000), the motion data from the plurality of motion sensors based on a selection strategy (401);

pre-integrating, by the HMD device (1000), the motion data from a plurality of sensor data based on the selection strategy (401); and

determining, by the HMD device (1000), a predicted pose of a user wearing the HMD device (1000).

3. The method as claimed in claim 2, wherein determining, by the HMD device (1000), the predicted pose of the user wearing the HMD device (1000), comprises:

receiving, by the HMD device (1000), at least one of image frames, landmarks in the plurality of image frames, and the predicted pose of the user wearing the HMD device (1000); and

determining, by the HMD device (1000), a refined pose for frames based on a skipping strategy using the at least one of image frames, the landmarks in the plurality of image frames, and the predicted pose of the user wearing the HMD device (1000).

4. The method as claimed in claim 2, wherein pre-integrating, by the HMD device, the motion data from the plurality of motion sensors based on the selection strategy (401), comprises:

determining, by the HMD device (1000), a threshold for a pre-integrated motion data and a refined pose frame, wherein the threshold is an amount of noise in the motion data;

determining, by the HMD device (1000), a deviation in the threshold between the pre-integrated motion data and the refined pose frames; and

identifying, by the HMD device (1000), a boundary of the refined pose frames in a plurality of directions based on the deviation in the threshold;

determining, by the HMD device (1000), whether the boundary of the refined pose frames in the plurality of directions is greater than the threshold; and

pre-integrating, by the HMD device (1000), the motion data when the boundary of the refined pose frames in the plurality of directions in less than the threshold.

5. The method as claimed in claim 3, wherein determining, by the HMD device (1000), the refined pose frames based on a skipping strategy using at least one of image frames, landmarks in the plurality of image frames, and the predicted pose of the user wearing the HMD device (1000), comprises;

receiving, by the HMD device (1000), the pre-integrated motion data when a boundary of the refined pose frames in a plurality of directions is less than a threshold;

determining, by the HMD device (1000), an amount of threshold beyond the boundary of the refined pose frames for a plurality of historical image frames of the refined pose frames;

determining, by the HMD device (1000), a margin value for the threshold beyond the boundary of the refined pose frames; and

selecting, by the HMD device (1000), the skipping strategy when the plurality of historical image frames is within the margin value.

6. A Head Mounted Display, "HMD", device (1000) for motion synchronization-based head pose estimation, comprising:

a processor (1001);
a memory (1002);
a Simultaneous Localization and Mapping, "SLAM", camera; and
a motion estimation controller (1004) in communication with the processor (1001) and the memory (1002), wherein the motion estimation controller (1004) is configured to:

receive motion data from a plurality of motion sensors of the HMD device (1000),
receive a plurality of image frames from memory (1002) of the HMD device (1000);
**characterised in that** the motion estimation controller is further configured to:

estimate a plurality of motion parameters of head movements of a user from the plurality of image frames received from the memory (1002),
generate a filtered subset of motion data received from the plurality of motion sensors based on the plurality of motion parameters of the head movements,
synchronize the plurality of image frames received from the memory (1002) and the filtered subset of the motion data, and estimate the head pose based on the synchronized plurality of image frames and motion data.

7. The HMD device (1000) as claimed in claim 6, wherein the motion data is received from the plurality of motion sensors of the HMD device (1000), and the motion estimation controller (1004) is further configured to;

select the motion data from the plurality of motion sensors based on selection strategy (401);
pre-integrate the motion data from a plurality of sensor data based on the selection strategy (401); and
determine a predicted pose of a user wearing the HMD device (1000).

8. The HMD device (1000) as claimed in claim 7, wherein the determining of the predicted pose of the user wearing the HMD device (1000), comprises;

receiving at least one of image frames, landmarks in the plurality of image frames, and the predicted pose of the user wearing the HMD device (1000); and
determining a refined pose for frames based on a skipping strategy using the at least one of image frames, the landmarks in the plurality of image frames, and the predicted pose of the user wearing the HMD device (1000).

9. The HMD device (1000) as claimed in claim 7 or 8, wherein pre-integrating the motion data from the plurality of motion sensors based on the selection strategy (401), comprises;

determining a threshold for a pre-integrated motion data and a refined pose frame, wherein the threshold is an amount of noise in the motion data;
determining a deviation in the threshold between the pre-integrated motion data and the refined pose frames; and
identifying a boundary of the refined pose frames in a plurality of directions based on the deviation in the threshold;
determining whether the boundary of the refined pose frames in the plurality of directions is greater than the threshold; and
pre-integrating the motion data when the boundary of the refined pose frames in the plurality of directions in less than the threshold.

10. The HMD device (1000) as claimed in claim 9, wherein the refined pose frames are determined based on a skipping strategy using at least one of image frames, landmarks in the plurality of image frames, and the motion estimation controller (1004) is further configured to determine the predicted pose of the user wearing the HMD device (1000) by:

receiving the pre-integrated motion data when a boundary of the refined pose frames in a plurality of directions is less than a threshold;
determining an amount of threshold beyond the boundary of the refined pose frames for a plurality of historical image frames of the refined pose frames;
determining a margin value for the threshold beyond the boundary of the refined pose frames; and
selecting the skipping strategy when the plurality of historical image frames is within the margin value.

## Patentansprüche

1. Verfahren zur bewegungssynchronisationsbasierten Kopfhaltungsschätzung durch eine kopfmontierte Anzeigevorrichtung, "HMD"-Vorrichtung, (1000), umfassend:

Empfangen von Bewegungsdaten durch die HMD-Vorrichtung (1000) von einer Vielzahl von Bewegungssensoren der HMD-Vorrichtung (1000);
Empfangen einer Vielzahl von Bildframes durch die HMD-Vorrichtung (1000) von mindestens einer Kamera zur simultanen Lokalisierung und Kartierung, SLAM-Kamera, der HMD-Vorrichtung (1000);
**dadurch gekennzeichnet, dass** es ferner Folgendes umfasst:

Schätzen einer Vielzahl von Bewegungsparametern von Kopfbewegungen eines Benutzers durch die HMD-Vorrichtung (1000) anhand der Vielzahl von Bildframes, die von einem Speicher (1002) empfangen wird;
Generieren einer gefilterten Teilmenge der Bewegungsdaten, die von der Vielzahl von Bewegungssensoren empfangen werden, durch die HMD-Vorrichtung (1000) basierend auf der Vielzahl von Bewegungsparametern der Kopfbewegungen;

Synchronisieren der Vielzahl von Bildframes, die von dem Speicher (1002) empfangen wird, und der gefilterten Teilmenge der Bewegungsdaten durch die HMD-Vorrichtung (1000); und

Schätzen der Kopfhaltung durch die HMD-Vorrichtung (1000) basierend auf der synchronisierten Vielzahl von Bildframes und Bewegungsdaten.

2. Verfahren nach Anspruch 1, wobei das Empfangen der Bewegungsdaten durch die HMD-Vorrichtung (1000) von der Vielzahl von Bewegungssensoren der HMD-Vorrichtung (1000) Folgendes umfasst:

Auswählen der Bewegungsdaten von der Vielzahl von Bewegungssensoren durch die HMD-Vorrichtung (1000) basierend auf einer Auswahlstrategie (401);

Vorintegrieren der Bewegungsdaten aus einer Vielzahl von Sensordaten durch die HMD-Vorrichtung (1000) basierend auf der Auswahlstrategie (401); und

Bestimmen einer vorhergesagten Haltung eines Benutzers, der die HMD-Vorrichtung (1000) trägt, durch die HMD-Vorrichtung (1000).

3. Verfahren nach Anspruch 2, wobei das Bestimmen der vorhergesagten Haltung des Benutzers, der die HMD-Vorrichtung (1000) trägt, durch die HMD-Vorrichtung (1000) Folgendes umfasst:

Empfangen von mindestens einem von Bildframes, Landmarken in der Vielzahl von Bildframes und der vorhergesagten Haltung des Benutzers, der die HMD-Vorrichtung (1000) trägt, durch die HMD-Vorrichtung (1000); und

Bestimmen einer verfeinerten Haltung für Frames durch die HMD-Vorrichtung (1000) basierend auf einer Überspringstrategie unter Verwendung des mindestens einen von Bildframes, der Landmarken in der Vielzahl von Bildframes und der vorhergesagten Haltung des Benutzers, der die HMD-Vorrichtung (1000) trägt.

4. Verfahren nach Anspruch 2, wobei das Vorintegrieren der Bewegungsdaten von der Vielzahl von Bewegungssensoren durch die HMD-Vorrichtung basierend auf der Auswahlstrategie (401) Folgendes umfasst:

Bestimmen eines Schwellenwerts für vorintegrierte Bewegungsdaten und einen verfeinerten Haltungsframe durch die HMD-Vorrichtung (1000), wobei der Schwellenwert eine Menge an Rauschen in den Bewegungsdaten ist;

Bestimmen einer Abweichung bei dem Schwellenwert zwischen den vorintegrierten Bewegungsdaten und den verfeinerten Haltungsframes durch die HMD-Vorrichtung (1000); und

Identifizieren einer Grenze der verfeinerten Haltungsframes in einer Vielzahl von Richtungen durch die HMD-Vorrichtung (1000) basierend auf der Abweichung bei dem Schwellenwert;

Bestimmen durch die HMD-Vorrichtung (1000), ob die Grenze der verfeinerten Haltungsframes in der Vielzahl von Richtungen größer als der Schwellenwert ist; und

Vorintegrieren der Bewegungsdaten durch die HMD-Vorrichtung (1000), wenn die Grenze der verfeinerten Haltungsframes in der Vielzahl von Richtungen kleiner als der Schwellenwert ist.

5. Verfahren nach Anspruch 3, wobei das Bestimmen der verfeinerten Haltungsframes durch die HMD-Vorrichtung (1000) basierend auf einer Überspringstrategie unter Verwendung von mindestens einem von Bildframes, Landmarken in der Vielzahl von Bildframes und der vorhergesagten Haltung des Benutzers, der die HMD-Vorrichtung (1000) trägt, Folgendes umfasst;

Empfangen der vorintegrierten Bewegungsdaten durch die HMD-Vorrichtung (1000), wenn eine Grenze der verfeinerten Haltungsframes in einer Vielzahl von Richtungen kleiner als ein Schwellenwert ist;

Bestimmen eines Betrags eines Schwellenwerts jenseits der Grenze der verfeinerten Haltungsframes durch die HMD-Vorrichtung (1000) für eine Vielzahl von historischen Bildframes der verfeinerten Haltungsframes;

Bestimmen eines Randwerts für den Schwellenwert jenseits der Grenze der verfeinerten Haltungsframes durch die HMD-Vorrichtung (1000); und

Auswählen der Überspringstrategie durch die HMD-Vorrichtung (1000), wenn die Vielzahl von historischen Bildframes innerhalb des Randwerts liegt.

6. Kopfmontierte Anzeigevorrichtung, "HMD"-Vorrichtung, (1000) zur bewegungssynchronisationsbasierten Kopfhaltungsschätzung, umfassend:

einen Prozessor (1001);

einen Speicher (1002);

eine Kamera zur simultanen Lokalisierung und Kartierung, "SLAM"-Kamera; und

eine Bewegungsschätzungssteuervorrichtung (1004) in Kommunikation mit dem Prozessor (1001) und dem Speicher (1002), wobei die Bewegungsschätzungssteuervorrichtung (1004) zu Folgendem konfiguriert ist:

Empfangen von Bewegungsdaten von einer Vielzahl von Bewegungssensoren der HMD-Vorrichtung (1000),

Empfangen einer Vielzahl von Bildframes von dem Speicher (1002) der HMD-Vorrichtung (1000);

**dadurch gekennzeichnet, dass** die Bewegungsschätzungssteuervorrichtung ferner zu Folgendem konfiguriert ist:

Schätzen einer Vielzahl von Bewegungsparametern von Kopfbewegungen eines Benutzers anhand der Vielzahl von Bildframes, die von dem Speicher (1002) empfangen wird,

Generieren einer gefilterten Teilmenge der Bewegungsdaten, die von der Vielzahl von Bewegungssensoren empfangen werden, basierend auf der Vielzahl von Bewegungsparametern der Kopfbewegungen,

Synchronisieren der Vielzahl von Bildframes, die von dem Speicher (1002) empfangen wird, und der gefilterten Teilmenge der Bewegungsdaten und

Schätzen der Kopfhaltung basierend auf der synchronisierten Vielzahl von Bildframes und Bewegungsdaten.

7. HMD-Vorrichtung (1000) nach Anspruch 6, wobei die Bewegungsdaten von der Vielzahl von Bewegungssensoren der HMD-Vorrichtung (1000) empfangen werden und die Bewegungsschätzungssteuervorrichtung (1004) ferner zu Folgendem konfiguriert ist;

Auswählen der Bewegungsdaten von der Vielzahl von Bewegungssensoren basierend auf einer Auswahlstrategie (401);

Vorintegrieren der Bewegungsdaten aus einer Vielzahl von Sensordaten basierend auf der Auswahlstrategie (401); und

Bestimmen einer vorhergesagten Haltung eines Benutzers, der die HMD-Vorrichtung (1000) trägt.

8. HMD-Vorrichtung (1000) nach Anspruch 7, wobei das Bestimmen der vorhergesagten Haltung des Benutzers, der die HMD-Vorrichtung (1000) trägt, Folgendes umfasst;

Empfangen von mindestens einem von Bildframes, Landmarken in der Vielzahl von Bildframes und der vorhergesagten Haltung des Benutzers, der die HMD-Vorrichtung (1000) trägt; und

Bestimmen einer verfeinerten Haltung für Frames basierend auf einer Überspringstrategie unter Verwendung des mindestens einen von Bildframes, der Landmarken in der Vielzahl von Bildframes und der vorhergesagten Haltung des Benutzers, der die HMD-Vorrichtung (1000) trägt.

9. HMD-Vorrichtung (1000) nach Anspruch 7 oder 8, wobei das Vorintegrieren der Bewegungsdaten von der Vielzahl von Bewegungssensoren basierend auf der Auswahlstrategie (401) Folgendes umfasst;

Bestimmen eines Schwellenwerts für vorintegrierte Bewegungsdaten und einen verfeinerten Haltungsframe, wobei der Schwellenwert eine Menge an Rauschen in den Bewegungsdaten ist;

Bestimmen einer Abweichung bei dem Schwellenwert zwischen den vorintegrierten Bewegungsdaten und den verfeinerten Haltungsframes; und

Identifizieren einer Grenze der verfeinerten Haltungsframes in einer Vielzahl von Richtungen basierend auf der Abweichung bei dem Schwellenwert;

Bestimmen, ob die Grenze der verfeinerten Haltungsframes in der Vielzahl von Richtungen größer als der Schwellenwert ist; und

Vorintegrieren der Bewegungsdaten, wenn die Grenze der verfeinerten Haltungsframes in der Vielzahl von Richtungen kleiner als der Schwellenwert ist.

10. HMD-Vorrichtung (1000) nach Anspruch 9, wobei die verfeinerten Haltungsframes basierend auf einer Überspringstrategie unter Verwendung von mindestens einem von Bildframes, Landmarken in der Vielzahl von Bildframes bestimmt werden und die Bewegungsschätzungssteuervorrichtung (1004) ferner dazu konfiguriert ist, die vorhergesagte Haltung des Benutzers, der die HMD-Vorrichtung (1000) trägt, durch Folgendes zu bestimmen:

Empfangen der vorintegrierten Bewegungsdaten, wenn eine Grenze der verfeinerten Haltungsframes in einer Vielzahl von Richtungen kleiner als ein Schwellenwert ist;
Bestimmen eines Betrags eines Schwellenwerts jenseits der Grenze der verfeinerten Haltungsframes für eine Vielzahl von historischen Bildframes der verfeinerten Haltungsframes;
Bestimmen eines Randwerts für den Schwellenwert jenseits der Grenze der verfeinerten Haltungsframes; und
Auswählen der Überspringstrategie, wenn die Vielzahl von historischen Bildframes innerhalb des Randwerts liegt.

**Revendications**

1. Procédé permettant l'estimation de pose de tête basée sur la synchronisation de mouvement, par un visiocasque, "HMD", (1000), comprenant :

la réception, par le visiocasque (1000), de données de mouvement en provenance d'une pluralité de capteurs de mouvement du visiocasque (1000) ;
la réception, par le visiocasque (1000), d'une pluralité de trames d'image en provenance d'au moins une caméra de localisation et de cartographie simultanées, SLAM, du visiocasque (1000) ;
**caractérisé en** comprenant en outre : l'estimation, par le visiocasque (1000), d'une pluralité de paramètres de mouvement des mouvements de tête d'un utilisateur à partir de la pluralité de trames d'image reçues en provenance d'une mémoire (1002) ;
la génération, par le visiocasque (1000), d'un sous-ensemble filtré des données de mouvement reçues en provenance de la pluralité de capteurs de mouvement sur la base de la pluralité de paramètres de mouvement des mouvements de tête ; la synchronisation, par le visiocasque (1000), de la pluralité de trames d'image reçues en provenance de la mémoire (1002) et du sous-ensemble filtré des données de mouvement ; et l'estimation, par le visiocasque (1000), de la pose de tête basée sur la pluralité synchronisée de trames d'image et de données de mouvement.

2. Procédé selon la revendication 1, ladite réception, par le visiocasque (1000), des données de mouvement en provenance de la pluralité de capteurs de mouvement du visiocasque (1000), comprenant : la sélection, par le visiocasque (1000), des données de mouvement en provenance de la pluralité de capteurs de mouvement sur la base d'une stratégie de sélection (401) ; la préintégration, par le visiocasque (1000), des données de mouvement en provenance d'une pluralité de données de capteur sur la base de la stratégie de sélection (401) ; et la détermination, par le visiocasque (1000), d'une pose prédite d'un utilisateur portant le visiocasque (1000).

3. Procédé selon la revendication 2, ladite détermination, par le visiocasque (1000), de la pose prédite de l'utilisateur portant le visiocasque (1000), comprenant : la réception, par le visiocasque (1000), d'au moins l'une de trames d'image, de points de repère dans la pluralité de trames d'image, et de la pose prédite de l'utilisateur portant le visiocasque (1000) ; et la détermination, par le visiocasque (1000), d'une pose affinée pour les trames basée sur une stratégie de saut à l'aide de l'au moins l'une de trames d'image, des points de repère dans la pluralité de trames d'image, et de la pose prédite de l'utilisateur portant le visiocasque (1000).

4. Procédé selon la revendication 2, ladite préintégration, par le visiocasque, des données de mouvement en provenance de la pluralité de capteurs de mouvement sur la base de la stratégie de sélection (401), comprenant : la détermination, par le visiocasque (1000), d'un seuil pour des données de mouvement préintégrées et d'une trame de pose affinée, ledit seuil étant une quantité de bruit dans les données de mouvement ;

la détermination, par le visiocasque (1000), d'une déviation du seuil entre les données de mouvement préintégrées et les trames de pose affinées ; et l'identification, par le visiocasque (1000), d'une limite des trames de pose affinées dans une pluralité de directions sur la base de la déviation du seuil ;
la détermination, par le visiocasque (1000), pour savoir si la limite de trames de pose affinées dans la pluralité de directions est supérieure au seuil ; et la préintégration, par le visiocasque (1000), des données de mouvement lorsque la limite des trames de pose affinées dans la pluralité de directions est inférieure au seuil.

5. Procédé selon la revendication 3, ladite détermination, par le

visiocasque (1000), des trames de pose affinées sur la base d'une stratégie de saut à l'aide d'au moins l'une des trames d'image, des points de repère dans la pluralité de trames d'image, et de la pose prédite de l'utilisateur portant le visiocasque (1000), comprenant ;

la réception, par le visiocasque (1000), des données de mouvement préintégrées lorsqu'une limite des trames de pose affinées dans une pluralité de directions est inférieure à un seuil ;

la détermination, par le visiocasque (1000), d'une quantité de seuil au-delà de la limite des trames de pose affinées pour une pluralité de trames d'image historiques des trames de pose affinées ;

la détermination, par le visiocasque (1000), d'une valeur de marge pour le seuil au-delà de la limite des trames de pose affinées ; et la sélection, par le visiocasque (1000), de la stratégie de saut lorsque la pluralité de trames d'image historiques est à l'intérieur de la valeur de marge.

6.  Visiocasque, HMD, (1000) pour l'estimation

de pose de tête basée sur la synchronisation de mouvement, comprenant : un processeur (1001) ;

une mémoire (1002) ;

une caméra de localisation et de cartographie simultanées, « SLAM » ; et un dispositif de commande d'estimation de mouvement (1004) en communication avec le processeur (1001) et la mémoire (1002), ledit dispositif de commande d'estimation de mouvement (1004) étant configuré pour :

recevoir des données de mouvement en provenance d'une pluralité de capteurs de mouvement du visiocasque (1000), recevoir une pluralité de trames d'image en provenance de la mémoire (1002) du visiocasque (1000) ;

**caractérisé en ce que** le dispositif de commande d'estimation de mouvement est en outre configuré pour : estimer une pluralité de paramètres de mouvement des mouvements de tête d'un utilisateur à partir de la pluralité de trames d'image reçues en provenance de la mémoire (1002), générer un sous-ensemble filtré de données de mouvement reçues en provenance de la pluralité de capteurs de mouvement sur la base de la pluralité de paramètres de mouvement des mouvements de tête, synchroniser la pluralité de trames d'image reçues en provenance de la mémoire (1002) et le sous-ensemble filtré des données de mouvement, et estimer la pose de tête sur la base de la pluralité synchronisée de trames d'image et de données de mouvement.

7.  Visiocasque (1000) selon la revendication 6, lesdites données de mouvement étant reçues en provenance de la pluralité de capteurs de mouvement du visiocasque (1000), et ledit dispositif de commande d'estimation de mouvement (1004) étant en outre configuré pour ;

sélectionner les données de mouvement à partir de la pluralité de capteurs de mouvement sur la base d'une stratégie de sélection (401) ;

préintégrer les données de mouvement à partir d'une pluralité de données de capteur sur la base de la stratégie de sélection (401) ; et déterminer une pose prédite d'un utilisateur portant le visiocasque (1000).

8.  Visiocasque (1000) selon la revendication 7, ladite détermination de la pose prédite de l'utilisateur portant le visiocasque (1000), comprenant ;

la réception d'au moins l'un des trames d'image, des points de repère dans la pluralité de trames d'image, et de la pose prédite de l'utilisateur portant le visiocasque (1000) ; et

la détermination d'une pose affinée pour des trames sur la base d'une stratégie de saut à l'aide de l'au moins un des trames d'image, des points de repère dans la pluralité de trames d'image et de la pose prédite de l'utilisateur portant le visiocasque (1000).

9.  Visiocasque (1000) selon la revendication 7 ou 8, ladite préintégration des données de mouvement en provenance de la pluralité de capteurs de mouvement sur la base de la stratégie de sélection (401), comprenant ; la détermination d'un seuil pour des données de mouvement préintégrées et une trame de pose affinée, ledit seuil étant une quantité de bruit dans les données de mouvement ;

la détermination d'une déviation du seuil entre les données de mouvement préintégrées et les trames de pose affinées ; et l'identification d'une limite des trames de pose affinées dans une pluralité de directions sur la base de la déviation du seuil ;

la détermination pour savoir si la limite des trames de pose affinées dans la pluralité de directions est supérieure au seuil ; et la préintégration des données de mouvement lorsque la limite des trames de pose affinées dans la pluralité de directions est inférieure au seuil.

10. Visiocasque (1000) selon la revendication 9, lesdites trames de pose affinées étant déterminées sur la base d'une stratégie de saut à l'aide d'au moins l'un des trames d'image, des points de repère dans la pluralité de trames d'image, et ledit dispositif de commande d'estimation de mouvement (1004) étant en outre configuré pour déterminer la pose prédite de l'utilisateur portant le visiocasque (1000) par : la réception des données de mouvement préintégrées lorsqu'une limite des trames de pose affinées dans une pluralité de directions est inférieure à un seuil ;

la détermination d'une quantité de seuil au-delà de la limite des trames de pose affinées pour une pluralité de trames d'image historiques des trames de pose affinées ;
la détermination d'une valeur de marge pour le seuil au-delà de la limite des trames de pose affinées ; et
la sélection de la stratégie de saut lorsque la pluralité de trames d'image historiques est à l'intérieur de la valeur de marge.

[Fig. 1A]

[Fig. 1B]

[Fig. 2]

[Fig. 3]

EP 4 483 573 B1

307

IMU Sensor Data
(Gyro +
Accelerometer)

$\omega_j = (\omega_x, \omega_y, \omega_z)$

$\alpha_j = (\alpha_x, \alpha_y, \alpha_z)$

306

Selective IMU
Pre-Integration

S240

301

Frame
Sequences

302

Feature
Extraction
and
Matching
Component

Matched
Features

S210

303

Depth
Estimation
Component

Landmarks
with Depth

S220

304

Sensor Fusion and
Feature Aware
Bundle Adjustment

Tracker

S230

305

Local and Global
Bundle Adjustment
(Pose Refinement)

Mapper

Funal Refined
Pose

24

[Fig. 4A]

IMU Sensor Data → **Selection Strategy** (401) → Selection Mask → **Selective Pre-Integration** (402) → Predicted Pose

306

S300      S310      S320

EP 4 483 573 B1

[Fig. 4B]

420

402

Selective
Pre-Integration

401

Selection
Strategy

410

26

[Fig. 5A]

[Fig. 5B]

EP 4 483 573 B1

[Fig. 6A]

3D model

601

610
603d
Pose 3
602d
Image 3

603c
Pose 2
602c
Image 2

602b
Image 1
603b
Pose 1

602a
Image 0
603a
Pose 0

[Fig. 6B]

[Fig. 7A]

[Fig. 7B]

[Fig. 8]

[Fig. 9]

| $F_{i-K}$ | $\cdot\cdot$ | $F_{i-4}$ | $F_{i-3}$ | $F_{i-2}$ | $F_{i-1}$ | — 900 |

S600

S610

SW Average

S620

Margin (M)

$Y = (F_{avg} + M)$

S630

$\begin{matrix} Y > \\ X \end{matrix}$ → Decision

$X = F_i'$

[Fig. 10]

— 1000

HMD

/ 1001

Processor

/ 1002

Memory

/ 1003

SLAM camera

/ 1004

Motion estimation controller

[Fig. 11]

```
┌─────────────────────────────────────────────────┐
│  Receive motion data from a plurality of motion  │
│  sensors of the HMD                              │── 1101
└─────────────────────────────────────────────────┘
                        │
                        ▼
┌─────────────────────────────────────────────────┐
│  Receive a plurality of image frames from at     │
│  least one Simultaneous Localization and Mapping │── 1102
│  (SLAM) camera of the HMD                        │
└─────────────────────────────────────────────────┘
                        │
                        ▼
┌─────────────────────────────────────────────────┐
│  Estimate a plurality of motion parameters of    │
│  the head movements from the plurality of image  │── 1103
│  frames received from the at least one SLAM      │
│  camera                                          │
└─────────────────────────────────────────────────┘
                        │
                        ▼
┌─────────────────────────────────────────────────┐
│  Generate a filtered subset of motion data       │
│  received from the plurality of motion sensors   │── 1104
│  based on the plurality of motion parameters of  │
│  the head movements                              │
└─────────────────────────────────────────────────┘
                        │
                        ▼
┌─────────────────────────────────────────────────┐
│  Synchronize the plurality of image frames       │
│  received from the at least one SLAM camera and  │── 1105
│  the filtered subset of motion data              │
└─────────────────────────────────────────────────┘
                        │
                        ▼
┌─────────────────────────────────────────────────┐
│  Estimate the head pose based on the plurality   │
│  of synchronized image frames and motion data    │── 1106
└─────────────────────────────────────────────────┘
```

**EP 4 483 573 B1**

**Patent documents cited in the description**

- WO 2023075765 A1
- US 2019178654 A1
- US 2020404078 A1